# FASCICULE DE BREVET EUROPEEN

(11) **EP 3 391 353 B1**
(45) Date de publication et mention de la délivrance du brevet: **05.02.2020**
(21) Numéro de dépôt: 16808726.0
(22) Date de dépôt: 13.12.2016
(51) Int. Cl.: G08C 17/02

(54) **PROCÉDÉ ET DISPOSITIF D'ANALYSE ET DE RÉPARTITION DE COMMANDES VOCALES**
VERFAHREN UND VORRICHTUNG ZUR ANALYSE UND VERTEILUNG VON SPRACHBEFEHLEN
METHOD AND DEVICE FOR ANALYSING AND DISTRIBUTING VOICE COMMANDS

(30) Priorité: 17.12.2015 FR 1562618
(43) Date de publication de la demande: 24.10.2018
(73) Titulaire: Delta Dore, 35270 Bonnemain (FR)
(72) Inventeur: LE TUTOUR, Jean, 35270 Bonnemain (FR)
(74) Mandataire: Cabinet Le Guen Maillet
(86) Numéro de dépôt international: PCT/EP2016/080840
(87) Numéro de publication internationale: WO 2017/102756

(56) Documents cités:
- EP-A1- 2 713 366
- US-A1- 2004 203 387

## Description

La présente invention concerne un procédé et un dispositif d'analyse et de répartition de commandes vocales émises par un individu désirant commander un périphérique.

La commande vocale d'appareils domestiques est pour beaucoup de personnes la manière optimale de gérer le fonctionnement des différents équipements d'un logement.

Pouvoir commander vocalement des périphériques tels que des dispositifs d'occultation, des éclairages, une température d'ambiance, des appareils électroménagers simplifie la vie des habitants d'une habitation.

Pour qu'un périphérique puisse interpréter une commande vocale, il faudrait que celui-ci dispose de moyens de traitement et de reconnaissance vocale. Chose non envisageable pour la simple raison que le coût du périphérique serait grandement augmenté.

Une autre solution consisterait à utiliser un dispositif centralisé qui effectue un traitement, une reconnaissance vocale de commandes vocales et commande les périphériques concernés. Cette solution est complexe à mettre en œuvre car les périphériques sont fabriqués par différents constructeurs, utilisant bien souvent des protocoles propriétaires pour la commande des périphériques qu'ils fabriquent. De plus, se pose le problème de la mise à jour du dispositif centralisé lorsqu'un nouveau périphérique est installé dans l'habitation.

Une telle solution est par exemple décrite dans la publication US 2004/0203387.

La présente invention a pour but de résoudre les inconvénients de l'art antérieur en proposant un procédé et un dispositif d'analyse et de répartition de commandes vocales émises par un individu désirant commander un périphérique parmi une pluralité de périphériques compris dans un bâtiment qui soit simple à mettre en œuvre et qui puisse facilement être mis à jour lorsqu'un nouveau périphérique est installé dans l'habitation.

A cette fin, selon un premier aspect, l'invention propose un procédé d'analyse et de répartition de commandes vocales émises par un individu désirant commander un périphérique parmi une pluralité de périphériques compris dans un bâtiment, caractérisé en ce que au moins un périphérique est géré par un dispositif gestionnaire d'une application différent d'au moins un autre dispositif gestionnaire d'une application gérant au moins un autre périphérique, le procédé comportant les étapes, exécutées par un dispositif analyseur et répartiteur de commandes vocales, de :
- réception de chaque dispositif gestionnaire d'application d'une liste de mots et/ou de groupements de mots interprétables par le dispositif gestionnaire d'application,
- mémorisation de chaque liste de mots et/ou de groupements de mots en association avec un identifiant du dispositif gestionnaire d'application ayant transféré la liste de mots et/ou de groupements de mots,
- détection de la réception d'une commande vocale,
- analyse de la commande vocale en identifiant un mot ou groupe de mot compris dans la commande vocale et appartenant à une liste de mots ou groupement de mots mémorisée dans le dispositif analyseur et répartiteur de commandes vocales,
- identification du dispositif gestionnaire d'une application associé à la liste comprenant un ensemble de mots et/ou de groupements de mots dans laquelle le mot ou le groupement de mots compris dans la commande vocale est inclus,
- transcription de la commande vocale dans un vocabulaire interprétable par le dispositif gestionnaire de l'application,
- transfert de la commande vocale transcrite au dispositif gestionnaire de l'application.

La présente invention concerne aussi un dispositif d'analyse et de répartition de commandes vocales émises par un individu désirant commander un périphérique parmi une pluralité de périphériques compris dans le bâtiment, caractérisé en ce que au moins un périphérique est géré par un dispositif gestionnaire d'une application différent d'au moins un autre dispositif gestionnaire d'une application gérant au moins un autre périphérique, le dispositif comportant :
- des moyens de réception de chaque dispositif gestionnaire d'application d'une liste de mots et/ou de groupements de mots interprétables par le dispositif gestionnaire d'application,
- des moyens de mémorisation de chaque liste de mots et/ou de groupements de mots en association avec un identifiant du dispositif gestionnaire d'application ayant transféré la liste de mots et/ou de groupements de mots,
- des moyens de détection de la réception d'une commande vocale,
- des moyens d'analyse de la commande vocale en identifiant un mot ou groupe de mots compris dans la commande vocale et appartenant à une liste de mots ou groupement de mots mémorisée dans le dispositif analyseur et répartiteur de commandes vocales,
- des moyens d'identification du dispositif gestionnaire d'une application associé à la liste comprenant un ensemble de mots et/ou de groupements de mots dans laquelle le mot ou le groupement de mots compris dans la commande vocale est inclus,
- des moyens de transcription de la commande vocale dans un vocabulaire interprétable par le dispositif gestionnaire de l'application,
- des moyens de transfert de la commande vocale transcrite au dispositif gestionnaire de l'application.

Ainsi, en utilisant un dispositif d'analyse et de répartition de commandes vocales et une pluralité de dispositifs gestionnaires d'applications, il est possible de manière économique de commander différents types de périphériques. Par exemple, chaque dispositif gestionnaire d'application est conçu et mis à jour par chaque fabriquant de périphérique et permet au fabricant d'utiliser des protocoles de communication propriétaire entre ses périphériques et son dispositif gestionnaire d'application. Les mises à jour sont aussi grandement simplifiées.

De plus, comme le dispositif d'analyse et de répartition de commandes vocales connaît les mots ou groupes de mots qu'il est susceptible de devoir analyser, la reconnaissance vocale effectuée par le dispositif d'analyse et de répartition de commandes vocales est optimisée.

Selon un mode particulier de l'invention, le dispositif d'analyse et de répartition de commandes vocales :
- reçoit un message comprenant au moins un mot et/ou au moins un groupement de mots d'un dispositif gestionnaire d'application,
- supprime le au moins un mot et/ou le au moins un groupement de mots de la liste de mots ou groupements de mots associés à l'identifiant du dispositif gestionnaire d'application ayant transféré le au moins un mot et/ou au moins un groupement de mots.

Ainsi, le dispositif d'analyse et de répartition de commandes vocales s'adapte aux différents dispositifs gestionnaires d'applications, leur transmet de manière optimale les différentes commandes.

Par ailleurs, le dispositif d'analyse et de répartition de commandes vocales n'a pas besoin d'être mis à jour pour s'adapter à de nouveaux dispositifs gestionnaires d'applications.

Selon un mode particulier de l'invention, la transcription de la commande vocale est sous forme de texte ou de symboles représentatifs de mots.

Ainsi, l'analyse de reconnaissance vocale, qui est coûteuse en puissance d'analyse est centralisée, et unique dans le bâtiment. Une transcription en symboles permet un fonctionnement en multilingue, un même symbole pouvant être utilisé pour un même mot dans des langues différentes.

Selon un mode particulier de l'invention, chaque dispositif gestionnaire d'application :
- reçoit une commande vocale transcrite,
- identifie le périphérique apte à traiter la commande vocale transcrite,
- transfère au périphérique d'un message de commande.

Ainsi, le comportement de chaque dispositif gestionnaire d'application est spécifique, et son fonctionnement peut être adapté au mieux pour les périphériques qu'il commande, et de manière indépendante des autres dispositifs gestionnaires d'applications.

Selon un mode particulier de l'invention, si un dispositif gestionnaire d'application ne peut identifier un périphérique ou traiter la commande vocale transcrite, le gestionnaire d'application transfère un message comprenant un compte rendu d'inexécution de la commande vocale transcrite reçue ainsi qu'une éventuelle liste d'au moins un mot et/ou d'au moins un groupe de mots associés à la commande vocale transcrite reçue.

Ainsi, le dispositif d'analyse et de répartition de commandes vocales peut optimiser au mieux les informations transmises aux dispositifs gestionnaires d'applications, en prenant en compte les comptes rendus d'inexécutions de commandes vocales transcrites reçues ainsi que des éventuelles listes d'au moins un mot et/ou d'au moins un groupe de mots associés aux commandes vocales transcrites.

L'invention concerne aussi les programmes d'ordinateur stockés sur un support d'informations, lesdits programmes comportant des instructions permettant de mettre en œuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un exemple de système de commande vocale de périphériques gérés par différentes applications dans un bâtiment dans lequel la présente invention est implémentée ;
la Fig. 2 représente un exemple d'architecture d'un dispositif analyseur répartiteur de commandes vocales selon la présente invention ;
la Fig. 3 représente un exemple d'architecture d'un dispositif gestionnaire d'une application selon la présente invention ;
la Fig. 4 représente un exemple d'algorithme exécuté par un dispositif analyseur répartiteur de commandes vocales selon la présente invention ;
la Fig. 5 représente un exemple d'algorithme exécuté par un dispositif gestionnaire d'application selon la présente invention.

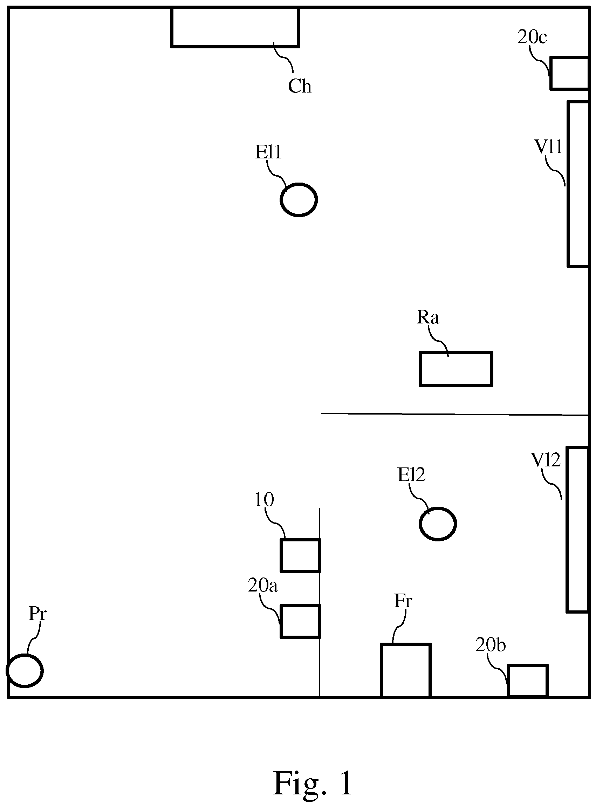

La **Fig. 1** représente un exemple de système de commande vocale de périphériques gérés par différents dispositifs gestionnaires d'applications dans un bâtiment dans lequel la présente invention est implémentée.

Le système comporte un dispositif analyseur répartiteur de commandes vocales 10 et une pluralité de dispositifs gestionnaires d'applications 20a, 20b et 20c.

Le dispositif analyseur répartiteur de commandes vocales 10 est apte à recevoir une commande vocale d'un individu désirant commander un périphérique compris dans le bâtiment, à identifier à partir d'une analyse de la commande vocale, le dispositif gestionnaire de l'application gérant le périphérique, à transcrire la commande vocale dans un vocabulaire interprétable par le dispositif gestionnaire de l'application gérant le périphérique et à transférer un message comprenant la transcription de la commande vocale au dispositif gestionnaire de l'application gérant le périphérique.

La transcription de la commande est par exemple sous forme de texte ou de symboles représentatifs d'un mot.

Le dispositif gestionnaire 20 de l'application gérant le périphérique traite la transcription de la commande vocale comprise dans le message, détermine si la commande correspond à un périphérique dont il assure la gestion et dans l'affirmative transfère au périphérique un message de commande interprétable par le périphérique.

Dans l'exemple de la Fig. 1, le dispositif gestionnaire d'application 20a est un dispositif apte, par exemple, à commander l'allumage, la variation d'intensité, l'extinction de dispositifs d'éclairages El1, El2, l'ouverture totale ou partielle, la fermeture de dispositifs d'occultation Vl1, Vl2 tels que des volets roulants, la modification d'une température d'ambiance à partir d'un système de chauffage, au moins une prise d'alimentation en énergie électrique Pr.

Le dispositif gestionnaire d'application 20b est un dispositif apte, par exemple, à commander l'allumage, la variation de température, l'arrêt d'un four de cuisson Fr.

Le dispositif gestionnaire d'application 20c est un dispositif apte, par exemple, à commander le fonctionnement, l'arrêt d'un robot aspirateur Ra.

Bien entendu, la présente invention ne se limite pas aux exemples susmentionnés et est applicable à d'autres applications.

Il est à remarquer ici que le dispositif analyseur répartiteur de commandes vocales 10 peut être placé à l'extérieur au bâtiment voire dans un serveur gérant l'analyse et la répartition de commandes vocales pour une pluralité de bâtiments.

Dans ce cas, seuls un capteur et une interface de communication avec l'extérieur du bâtiment seront placés dans le bâtiment.

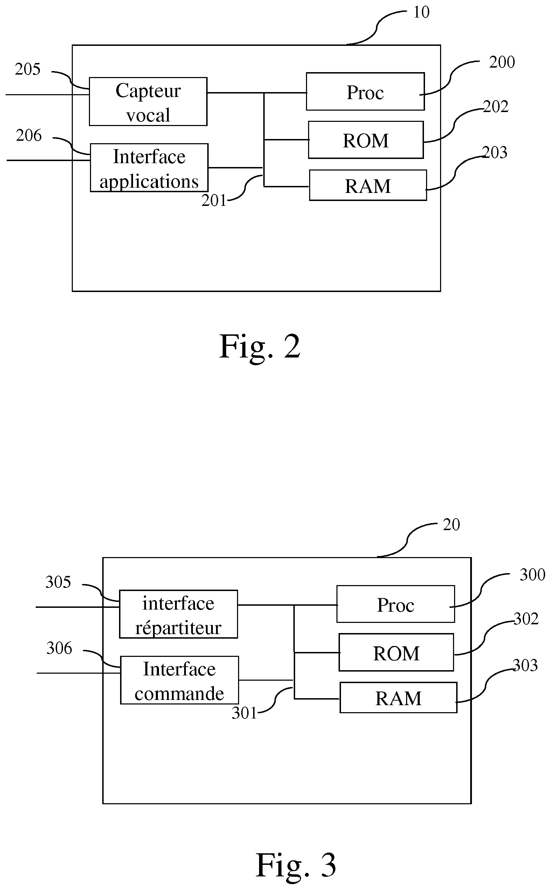

La **Fig. 2** représente un exemple d'architecture d'un dispositif analyseur répartiteur de commandes vocales selon la présente invention.

Le dispositif analyseur répartiteur de commandes vocales 10 comprend :
- un processeur, micro-processeur, ou microcontrôleur 200 ;
- une mémoire volatile 203 ;
- une mémoire non volatile 202 ;
- une interface capteur vocal 205 ;
- une interface de communication 206 avec les dispositifs gestionnaires d'applications 20 ;
- un bus de communication reliant le processeur 200 à la mémoire ROM 202, à la mémoire RAM 203, à l'interface capteur vocal 205 et à l'interface de communication 206 avec les dispositifs gestionnaires d'applications 20.

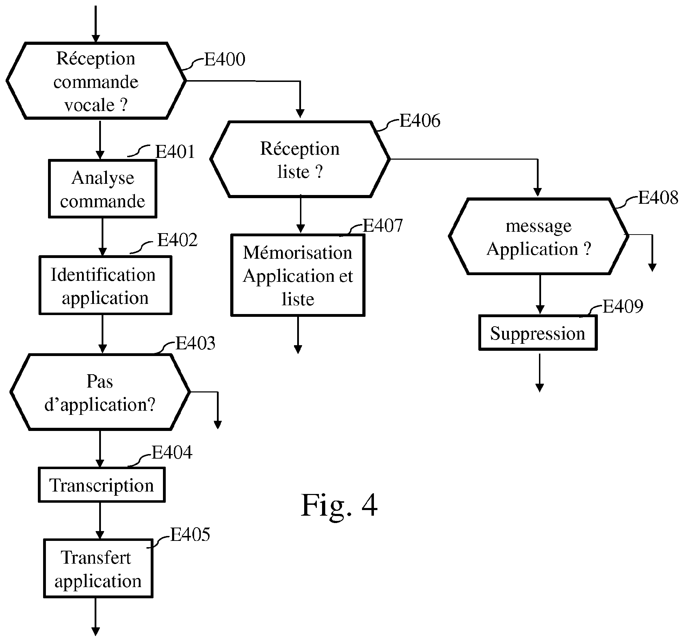

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque le dispositif analyseur répartiteur de commandes vocales 10 est mis sous tension, le processeur 200 est capable de lire de la mémoire volatile 203 des instructions et de les exécuter. Ces instructions forment un programme d'ordinateur qui cause la mise en œuvre, par le processeur 200, de tout ou partie du procédé décrit en relation avec la Fig. 4.

Tout ou partie du procédé décrit en relation avec la Fig. 4 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La **Fig. 3** représente un exemple d'architecture d'un dispositif gestionnaire d'une application selon la présente invention.

Le dispositif gestionnaire d'une application 20 comprend :
- un processeur, micro-processeur, ou microcontrôleur 300 ;
- une mémoire volatile 303 ;
- une mémoire non volatile 302;
- une interface de communication 305 avec le dispositif analyseur répartiteur de commandes vocales 10 ;
- une interface de commande 306 des périphériques gérés par le dispositif gestionnaire d'une application telle que par exemple une interface radio ;
- un bus de communication reliant le processeur 300 à la mémoire ROM 302, à la mémoire RAM 303, à l'interface de communication 205 et à l'interface de commande des périphériques gérés par le dispositif gestionnaire d'une application 20.

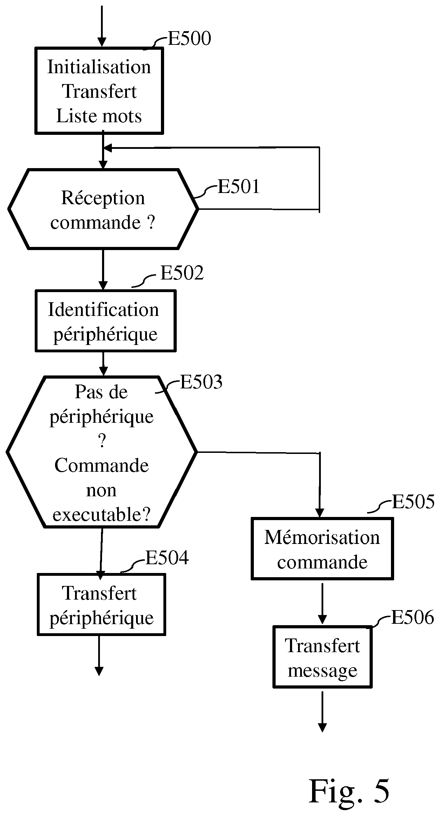

Le processeur 300 est capable d'exécuter des instructions chargées dans la mémoire volatile 303 à partir de la mémoire non volatile 302, d'une mémoire externe (non représentée), d'un support de stockage, tel qu'une carte SD ou autre, ou d'un réseau de communication. Lorsque le dispositif gestionnaire d'une application 20 est mis sous tension, le processeur 300 est capable de lire de la mémoire volatile 303 des instructions et de les exécuter. Ces instructions forment un programme d'ordinateur qui cause la mise en œuvre, par le processeur 300, de tout ou partie du procédé décrit en relation avec la Fig. 5.

Tout ou partie du procédé décrit en relation avec la Fig. 5 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

Il est à remarquer ici que le dispositif analyseur répartiteur de commandes vocales 10 et les dispositifs gestionnaires d'une application 20 peuvent être intégrés dans un même dispositif, et peuvent dans ce cas partager le même processeur. La **Fig. 4** représente un exemple d'algorithme exécuté par un dispositif analyseur répartiteur de commandes vocales selon la présente invention.

Plus précisément, le présent algorithme est décrit dans un exemple dans lequel il est exécuté par le processeur 200 du dispositif analyseur répartiteur de commandes vocales 10.

A l'étape E400, le processeur 200 vérifie si une commande vocale est reçue par l'interface capteur vocal 205.

Dans l'affirmative, le processeur 200 passe à l'étape E401. Dans la négative, le processeur 200 passe à l'étape E406.

A l'étape E401, le processeur 200 effectue une analyse de la commande vocale. Le processeur 200 recherche si des mots ou groupements de mots compris dans la commande vocale appartiennent à une liste comprenant un ensemble de mots et/ou de groupements de mots mémorisé dans la mémoire vive 203. Par exemple, le processeur 200 recherche dans la commande vocale les mots « chauffage », « chambre » ou « four », «préchauffage ».

A l'étape suivante E402, le processeur 200 recherche, parmi les dispositifs gestionnaires d'applications 20, un dispositif gestionnaire d'une application 20 qui est apte à traiter ladite commande vocale analysée.

Pour cela, le processeur 200 identifie le dispositif gestionnaire d'application 20 qui est associé à la liste comprenant un ensemble de mots et/ou de groupements de mots dans laquelle le mot ou le groupement de mots compris dans la commande vocale est inclus.

A l'étape suivante E403, le processeur 200 vérifie si un dispositif gestionnaire d'application 20 est apte à traiter ladite commande vocale analysée.

Dans la négative, le processeur 200 retourne à l'étape E400 en attente d'un nouveau message vocal. Dans l'affirmative, le processeur 200 passe à l'étape E404.

A l'étape E404, le processeur 200 effectue une transcription du message vocal dans un langage ou vocabulaire interprétable par le dispositif gestionnaire d'application 20 identifié comme apte à traiter ladite commande vocale analysée. La transcription est par exemple la mise sous la forme d'un texte exploitable par le dispositif gestionnaire d'une application 20 identifié comme apte à traiter ladite commande vocale analysée ou un ensemble de symboles correspondant au mot ou mots identifiés.

A l'étape suivante E405, le processeur 200 commande le transfert de la transcription au dispositif gestionnaire d'une application 20 identifié comme apte à traiter ladite commande vocale analysée.

Cette opération effectuée, le processeur 200 retourne à l'étape E400.

A l'étape E406, le processeur 200 vérifie si une liste comprenant un ensemble de mots et/ou de groupements de mots est reçue d'un dispositif gestionnaire d'une application 20.

Par exemple, le dispositif gestionnaire d'une application 20a transfère lors de son installation dans le bâtiment la liste de tous les mots et/ groupements de mots interprétables par le dispositif gestionnaire d'une application 20a.

Par exemple la liste comprenant un ensemble de mots et/ou de groupements de mots comprend la liste non exhaustive suivante « ouverture volet roulant séjour » fermeture volet roulant séjour », « augmenter ouverture volet roulant séjour », « ouverture volet roulant chambre », « fermeture volet roulant chambre », « augmenter ouverture volet roulant chambre », « augmenter chauffage X degrés », « baisser chauffage X degrés », « augmenter éclairage séjour », « baisser éclairage séjour », « allumer éclairage chambre », « éteindre éclairage chambre ».

Par exemple, le dispositif gestionnaire d'une application 20b transfère lors de son installation dans le bâtiment la liste comprenant un ensemble de mots et/ou de groupements de mots interprétables par le dispositif gestionnaire d'une application 20b.

Par exemple, la liste comprenant un ensemble de mots et/ou de groupements de mots comprend la liste non exhaustive suivante « allumer », « four», « arrêt », « thermostat ».

Si une liste de mots ou phrases est reçue, le processeur 200 passe à l'étape E407. Dans la négative, le processeur 200 passe à l'étape E408.

A l'étape E407, le processeur 200 mémorise la liste de mots et/ou groupements de mots reçue ainsi qu'un identifiant du dispositif gestionnaire d'une application ayant transféré la liste de mots ou phrases reçue.

Dans un mode particulier de réalisation de la présente invention, la liste comporte en outre, pour chaque mot ou groupement de mots, un ou plusieurs symboles.

Cette opération effectuée, le processeur 200 retourne à l'étape E400.

A l'étape E408, le processeur 200 vérifie si un message est reçu d'un dispositif gestionnaire d'application 20. Le message comprend un compte rendu d'inexécution d'une commande vocale transcrite ainsi qu'une éventuelle liste d'au moins un mot et/ou d'au moins un groupe de mots associés à la commande vocale transcrite reçue. Ce mot ou groupement de mots est une commande non reconnue par le positif gestionnaire d'applications 20. Ce mot ou groupement de mots a préalablement été reçu par le dispositif gestionnaire d'application 20 et ne correspond pas à une commande d'un périphérique géré par le dispositif gestionnaire d'application 20. Ce mot ou groupement de mots peut être devenu obsolète vu l'évolution des périphériques gérés par le dispositif gestionnaire d'application 20 ou lié à une erreur dans la transcription ou l'analyse effectuée par le dispositif analyseur répartiteur de commandes vocales 10.

Dans l'affirmative, le processeur 200 passe à l'étape E409.

Dans la négative, le processeur 200 retourne à l'étape E400.

A l'étape E409, le processeur 200 supprime de la liste comprenant un ensemble de mots et/ou de groupements de mots reçue du dispositif gestionnaire d'une application 20 ayant transféré la notification, chaque mot ou groupement de mots compris dans la notification.

La **Fig. 5** représente un exemple d'algorithme exécuté par un dispositif gestionnaire d'application selon la présente invention.

Plus précisément, le présent algorithme est décrit dans un exemple dans lequel il est exécuté par le processeur 300 du dispositif gestionnaire d'application 20.

A l'étape E500, lors par exemple de l'installation du dispositif gestionnaire d'application 20, le processeur 300 commande le transfert au dispositif analyseur répartiteur de commandes vocales 10 d'une liste comprenant un ensemble de mots et/ou de groupements de mots interprétables par le dispositif gestionnaire d'une application 20.

Dans un mode particulier de réalisation de la présente invention, la liste comporte en outre, pour chaque mot ou groupement de mots un ou plusieurs symboles.

Par exemple, le dispositif gestionnaire d'application 20a commande le transfert de la liste non exhaustive suivante « ouverture volet roulant séjour » « fermeture volet roulant séjour », « augmenter ouverture volet roulant séjour », « ouverture volet roulant chambre » « fermeture volet roulant chambre », « augmenter ouverture volet roulant chambre », « augmenter chauffage X degrés », « baisser chauffage X degrés », « augmenter éclairage séjour », « baisser éclairage séjour », « allumer éclairage chambre », « éteindre éclairage chambre ».

Par exemple, le dispositif gestionnaire d'application 20b transfère lors de son installation dans le bâtiment la liste comprenant un ensemble de mots et/ou de groupements de mots interprétables par le dispositif gestionnaire d'une application 20b.

Par exemple la liste comprenant un ensemble de mots et/ou de groupements de mots comprend la liste non exhaustive suivante « allumer four», « arrêt four », « thermostat four X degrés ».

A l'étape suivante E501, le processeur 300 vérifie si un message comprenant une commande vocale transcrite est reçu du dispositif analyseur répartiteur de commandes vocales 10.

Dans la négative, le processeur 300 retourne à l'étape E501. Dans l'affirmative, le processeur 300 passe à l'étape E502.

A l'étape E502, le processeur 300 recherche parmi les périphériques gérés par le dispositif gestionnaire d'une application 20 le ou les périphériques correspondant à la commande vocale transcrite reçue.

A l'étape E503, le processeur 300 vérifie si au moins un périphérique géré par le dispositif gestionnaire d'application 20 correspond à la commande vocale transcrite reçue.

Dans la négative, le processeur passe à l'étape E505. Dans l'affirmative, le processeur 300 passe à l'étape E504.

A l'étape E504, le processeur 300 commande le transfert au périphérique identifié à l'étape E502 d'un message de commande interprétable par le périphérique.

Cette opération effectuée, le processeur 300 retourne à l'étape E501.

A l'étape E505, le processeur 300 mémorise la commande vocale transcrite.

A l'étape E506, le processeur 300 commande le transfert d'un message comprenant un compte rendu d'inexécution de la commande vocale transcrite reçue ainsi qu'une éventuelle liste d'au moins un mot et/ou d'au moins un groupe de mots associés à la commande vocale transcrite reçue si aucun périphérique n'est identifié, ou si la commande vocale transcrite n'est pas exécutable. Ce au moins un mot ou au moins un groupement de mots est une commande non reconnue par le gestionnaire d'une application 20. Ce mot ou groupement de mots a préalablement été reçu par le dispositif gestionnaire d'une application 20 et ne correspond pas à une commande d'un périphérique géré par le dispositif gestionnaire d'une application 20. Ce mot ou groupement de mots peut être devenu obsolète vu l'évolution des périphériques gérés par le dispositif gestionnaire d'une application 20 ou lié à une erreur dans la transcription ou l'analyse sémantique effectuée par le dispositif analyseur répartiteur de commandes vocales 10.

Cette opération effectuée, le processeur 300 retourne à l'étape E501.

## Revendications

1. Procédé d'analyse et de répartition de commandes vocales émises par un individu désirant commander un périphérique parmi une pluralité de périphériques compris dans un bâtiment, **caractérisé en ce que** au moins un périphérique est géré par un dispositif gestionnaire d'une application différent d'au moins un autre dispositif gestionnaire d'une application gérant au moins un autre périphérique, le procédé comportant les étapes, exécutées par un dispositif analyseur et répartiteur de commandes vocales, de :
- réception (E406) de chaque dispositif gestionnaire d'application d'une liste de mots et/ou de groupements de mots interprétables par le dispositif gestionnaire d'application,
- mémorisation (E407) de chaque liste de mots et/ou de groupements de mots en association avec un identifiant du dispositif gestionnaire d'application ayant transféré la liste de mots et/ou de groupements de mots,
- détection (E400) de la réception d'une commande vocale,
- analyse (E401) de la commande vocale en recherchant si un mot ou groupe de mots compris dans la commande vocale appartient à une liste de mots ou groupement de mots mémorisée dans le dispositif analyseur et répartiteur de commandes vocales,
- identification (E402) du dispositif gestionnaire d'une application associé à la liste comprenant un ensemble de mots et/ou de groupements de mots dans laquelle le mot ou le groupement de mots compris dans la commande vocale appartient,
- transcription (E404) de la commande vocale dans un vocabulaire interprétable par le dispositif gestionnaire de l'application identifié,
- transfert (E405) de la commande vocale transcrite au dispositif gestionnaire de l'application identifié.

2. Procédé selon la revendication 1, **caractérisé en ce que** le procédé comporte en outre les étapes de :
- réception d'un message comprenant au moins un mot ou au moins un groupement de mots d'un dispositif gestionnaire d'application,
- suppression du au moins un mot ou du au moins un groupement de mots de la liste de mots ou groupements de mots associé à l'identifiant du dispositif gestionnaire d'application ayant transféré le au moins un mot ou le au moins un groupement de mots.

3. Procédé selon l'une quelconque des revendications 1 à 2, **caractérisé en ce que** la transcription de la commande vocale est sous forme de texte ou de symboles représentatifs de mots.

4. Procédé selon l'une quelconque des revendications 1 à 3, **caractérisé en ce que** le procédé comporte en outre les étapes exécutées par chaque gestionnaire d'application, de :
- réception d'une commande vocale transcrite,
- identification du périphérique apte à traiter la commande vocale transcrite,
- transfert au périphérique d'un message de commande du périphérique.

5. Procédé selon la revendication 4, **caractérisé en ce que** le procédé comporte en outre l'étape exécutée par un dispositif gestionnaire d'application si le dispositif gestionnaire d'application ne peut identifier un périphérique ou traiter la commande vocale transcrite, de :
- transfert d'un message comprenant un compte rendu d'inexécution de la commande vocale transcrite reçue ainsi qu'une éventuelle liste d'au moins un mot et/ou d'au moins un groupe de mots associés à la commande vocale transcrite reçue.

6. Dispositif d'analyse et de répartition de commandes vocales émises par un individu désirant commander un périphérique parmi une pluralité de périphériques compris dans le bâtiment, **caractérisé en ce que** au moins un périphérique est géré par un dispositif gestionnaire d'une application différent d'au moins un autre dispositif gestionnaire d'une application gérant au moins un autre périphérique, le dispositif comportant :
- des moyens de réception de chaque dispositif gestionnaire d'application d'une liste de mots et/ou de groupements de mots interprétables par le dispositif gestionnaire d'application,
- des moyens de mémorisation de chaque liste de mots et/ou de groupements de mots en association avec un identifiant du dispositif gestionnaire d'application ayant transféré la liste de mots et/ou de groupements de mots,
- des moyens de détection de la réception d'une commande vocale,
- des moyens d'analyse de la commande vocale en recherchant si un mot ou groupe de mots compris dans la commande vocale appartient à une liste de mots ou groupement de mots mémorisée dans le dispositif analyseur et répartiteur de commandes vocales,
- des moyens d'identification du dispositif gestionnaire d'une application associé à la liste comprenant un ensemble de mots et/ou de groupements de mots auquel le mot ou le groupement de mots compris dans la commande vocale appartient,
- des moyens de transcription de la commande vocale dans un vocabulaire interprétable par le dispositif gestionnaire de l'application identifié,
- des moyens de transfert de la commande vocale transcrite au dispositif gestionnaire de l'application identifié.

7. Système comportant un dispositif selon la selon la revendication 6, **caractérisé en ce que** le système comporte des gestionnaire d'application et **en ce que** chaque gestionnaire d'application comporte :
- des moyens de réception d'une commande vocale transcrite,
- des moyens d'identification du périphérique apte à traiter la commande vocale transcrite,
- des moyens de transfert au périphérique d'un message de commande du périphérique.

8. Système selon la revendication 7, **caractérisé en ce que** chaque gestionnaire d'application comporte :
- des moyens de transfert d'un message comprenant un compte rendu d'inexécution de la commande vocale transcrite reçue ainsi qu'une éventuelle liste d'au moins un mot et/ou d'au moins un groupe de mots associés à la commande vocale transcrite reçue si aucun périphérique n'est identifié, ou si la commande vocale transcrite n'est pas exécutable.

## Patentansprüche

1. Verfahren zum Analysieren und Verteilen von Sprachbefehlen, die von einer Person ausgegeben werden, die ein Peripheriegerät aus einer Vielzahl von in einem Gebäude enthaltenen Peripheriegeräten steuern möchte, **dadurch gekennzeichnet, dass** mindestens ein Peripheriegerät von einer Vorrichtung zum Verwalten einer Anwendung verwaltet wird, die sich von mindestens einer anderen Vorrichtung zum Verwalten einer Anwendung unterscheidet, die mindestens ein anderes Peripheriegerät verwaltet, wobei das Verfahren die folgenden Schritte umfasst, die von einer Vorrichtung zum Analysieren und Verteilen von Sprachbefehlen ausgeführt werden:
- Empfangen (E406) einer Liste von Wörtern und/oder Wortgruppen, die von der Vorrichtung zum Verwalten einer Anwendung interpretiert werden können, von jeder Vorrichtung zum Verwalten einer Anwendung,
- Speichern (E407) jeder Liste von Wörtern und/oder Wortgruppen in Verbindung mit einer Kennung der Vorrichtung zum Verwalten einer Anwendung, die die Liste von Wörtern und/oder Wortgruppen übertragen hat,
- Erkennen (E400) des Empfangs eines Sprachbefehls,
- Analysieren (E401) des Sprachbefehls, indem ermittelt wird, ob ein Wort oder eine Wortgruppe in dem Sprachbefehl zu einer Liste von Wörtern oder Wortgruppen gehört, die in der Vorrichtung zum Analysieren und Verteilen von Sprachbefehlen gespeichert sind,
- Identifizieren (E402) der Vorrichtung zum Verwalten einer Anwendung, die der Liste zugeordnet ist, die einen Satz von Wörtern und/oder Wortgruppen aufweist und zu der das Wort oder die Wortgruppe gehört, das/die in dem Sprachbefehl enthalten ist,
- Transkribieren (E404) des Sprachbefehls in ein von der identifizierten Vorrichtung zum Verwalten einer Anwendung interpretierbares Vokabular,
- Übertragen (E405) des transkribierten Sprachbefehls an die identifizierte Vorrichtung zum Verwalten einer Anwendung.

2. Verfahren nach Anspruch 1, **dadurch gekennzeichnet, dass** das Verfahren darüber hinaus die folgenden Schritte aufweist:
- Empfangen einer Nachricht, die mindestens ein Wort oder mindestens eine Wortgruppe einer Vorrichtung zum Verwalten einer Anwendung aufweist,
- Löschen von mindestens einem Wort oder von mindestens einer Wortgruppe von der Liste von Wörtern und/oder Wortgruppen, die der Kennung der Vorrichtung zum Verwalten einer Anwendung zugeordnet ist, die das mindestens eine Wort oder die mindestens eine Wortgruppe übertragen hat.

3. Verfahren nach einem der Ansprüche 1 bis 2, **dadurch gekennzeichnet, dass** das Transkribieren des Sprachbefehls in Form von Text oder Symbolen erfolgt, die Wörter darstellen.

4. Verfahren nach einem der Ansprüche 1 bis 3, **dadurch gekennzeichnet, dass** das Verfahren darüber hinaus die Schritte aufweist, die von jeder Vorrichtung zum Verwalten einer Anwendung ausgeführt werden:
- Empfangen eines transkribierten Sprachbefehls,
- Identifizieren des Peripheriegeräts, das den transkribierten Sprachbefehl verarbeiten kann,
- Übertragen einer Befehlsnachricht des Peripheriegeräts an das Peripheriegerät.

5. Verfahren nach Anspruch 4, **dadurch gekennzeichnet, dass** das Verfahren darüber hinaus den Schritt aufweist, der von einer Vorrichtung zum Verwalten einer Anwendung ausgeführt wird, wenn die Vorrichtung zum Verwalten einer Anwendung ein Peripheriegerät nicht identifizieren oder den transkribierten Sprachbefehl nicht verarbeiten kann:
- Übertragen einer Nachricht, die einen Bericht über die Nichtausführung des empfangenen transkribierten Sprachbefehls sowie eine mögliche Liste mit mindestens einem Wort und/oder mindestens einer Wortgruppe aufweist, die dem empfangenen transkribierten Sprachbefehl zugeordnet sind.

6. Vorrichtung zum Analysieren und Verteilen von Sprachbefehlen, die von einer Person ausgegeben werden, die ein Peripheriegerät aus einer Vielzahl von in dem Gebäude enthaltenen Peripheriegeräten steuern möchte, **dadurch gekennzeichnet, dass** mindestens ein Peripheriegerät von einer Vorrichtung zum Verwalten einer Anwendung verwaltet wird, die sich von mindestens einer anderen Vorrichtung zum Verwalten einer Anwendung unterscheidet, die mindestens ein anderes Peripheriegerät verwaltet, wobei die Vorrichtung Folgendes aufweist:
- Mittel zum Empfangen einer Liste von Wörtern und/oder Wortgruppen, die von der Vorrichtung zum Verwalten einer Anwendung interpretiert werden können, von jeder Vorrichtung zum Verwalten einer Anwendung,
- Mittel zum Speichern jeder Liste von Wörtern und/oder Wortgruppen in Verbindung mit einer Kennung der Vorrichtung zum Verwalten einer Anwendung, die die Liste von Wörtern und/oder Wortgruppen übertragen hat,
- Mittel zum Erkennen des Empfangs eines Sprachbefehls,
- Mittel zum des Sprachbefehls, indem ermittelt wird, ob ein Wort oder eine Wortgruppe in dem Sprachbefehl zu einer Liste von Wörtern oder Wortgruppen gehört, die in der Vorrichtung zum Analysieren und Verteilen von Sprachbefehlen gespeichert sind,
- Mittel zum Identifizieren der Vorrichtung zum Verwalten einer Anwendung, die der Liste zugeordnet ist, die einen Satz von Wörtern und/oder Wortgruppen aufweist und zu der das Wort oder die Wortgruppe gehört, das/die in dem Sprachbefehl enthalten ist,
- Mittel zum Transkribieren des Sprachbefehls in ein von der identifizierten Vorrichtung zum Verwalten einer Anwendung interpretierbares Vokabular,
- Mittel zum Übertragen des transkribierten Sprachbefehls an die identifizierte Vorrichtung zum Verwalten einer Anwendung.

7. System mit einer Vorrichtung nach Anspruch 6, **dadurch gekennzeichnet, dass** das System Vorrichtungen zum Verwalten einer Anwendung aufweist und dass jede Vorrichtung zum Verwalten einer Anwendung Folgendes aufweist:
- Mittel zum Empfangen eines transkribierten Sprachbefehls,
- Mittel zum Identifizieren des Peripheriegeräts, das den transkribierte Sprachbefehl verarbeiten kann,
- Mittel zum Übertragen einer Befehlsnachricht des Peripheriegeräts an das Peripheriegerät.

8. System nach Anspruch 7, **dadurch gekennzeichnet, dass** jede Vorrichtung zum Verwalten einer Anwendung Folgendes aufweist:
- Mittel zum Übertragen einer Nachricht, die einen Bericht über die Nichtausführung des empfangenen transkribierten Sprachbefehls sowie eine mögliche Liste mit mindestens einem Wort und/oder mindestens einer Wortgruppe aufweist, die dem empfangenen transkribierten Sprachbefehl zugeordnet sind, wenn kein Peripheriegerät identifiziert wird oder wenn der transkribierte Sprachbefehl nicht ausführbar ist.

## Claims

1. A method for analyzing and distributing voice commands transmitted by an individual seeking to control a peripheral unit from among a plurality of peripheral units contained in a building, **characterized in that** at least one peripheral unit is managed by an application management device different from at least one other application management device managing at least one other peripheral unit, the method comprising the following steps, executed by a device for analyzing and distributing voice commands:
- receiving (E406), from each application management device, a list of words and/or groups of words that can be interpreted by the application management device;
- storing (E407) each list of words and/or groups of words in combination with an identifier of the application management device that transferred the list of words and/or groups of words;
- detecting (E400) the reception of a voice command;
- analyzing (E401) the voice command by identifying a word or group of words included in the voice command and belonging to a list of words or group of words stored in the device for analyzing and distributing voice commands;
- identifying (E402) the application management device associated with the list comprising a set of words and/or groups of words in which the word or the group of words included in the voice command is included;
- transcribing (E404) the voice command into a vocabulary that can be interpreted by the application management device;
- transferring (E405) the transcribed voice command to the application management device.

2. The method as claimed in claim 1, **characterized in that** the method further comprises the following steps:
- receiving a message comprising at least one word or at least one group of words from an application management device;
- deleting the at least one word or the at least one group of words from the list of words or groups of words associated with the identifier of the application management device that transferred the at least one word or the at least one group of words.

3. The method as claimed in any of claims 1 to 2, **characterized in that** the transcription of the voice command is in the form of text or of symbols representing words.

4. The method as claimed in any of claims 1 to 3, **characterized in that** the method further comprises the following steps executed by each application manager:
- receiving a transcribed voice command;
- identifying the peripheral unit capable of processing the transcribed voice command;
- transferring a peripheral unit control message to the peripheral unit.

5. The method as claimed in claim 4, **characterized in that** the method further comprises the following step executed by an application management device if the application management device cannot identify a peripheral unit or process the transcribed voice command:
- transferring a message comprising a report of the non-execution of the received transcribed voice command, as well as a possible list of at least one word and/or of at least one group of words associated with the received transcribed voice command.

6. A device for analyzing and distributing voice commands transmitted by an individual seeking to control a peripheral unit from among a plurality of peripheral units contained in the building, **characterized in that** at least one peripheral unit is managed by an application management device different from at least one other application management device managing at least one other peripheral unit, the device comprising:
- means for receiving, from each application management device, a list of words and/or groups of words that can be interpreted by the application management device;
- means for storing each list of words and/or groups of words in combination with an identifier of the application management device that transferred the list of words and/or groups of words;
- means for detecting the reception of a voice command;
- means for analyzing the voice command by searching if a word or group of words included in the voice command belongs to a list of words or group of words stored in the device for analyzing and distributing voice commands;
- means for identifying the application management device associated with the list comprising a set of words and/or groups of words in which the word or the group of words included in the voice command belongs to;
- means for transcribing the voice command into a vocabulary that can be interpreted by the identified application management device;
- means for transferring the transcribed voice command to the identified application management device.

7. A system comprising a device as claimed in claim 6, **characterized in that** the system comprises application managers and **in that** each application manager comprises:
- means for receiving a transcribed voice command;
- means for identifying the peripheral unit capable of processing the transcribed voice command;
- means for transferring a peripheral unit control message to the peripheral unit.

8. The system as claimed in claim 7, **characterized in that** each application manager comprises:
- means for transferring a message comprising a report of the non-execution of the received transcribed voice command, as well as a possible list of at least one word and/or of at least one group of words associated with the received transcribed voice command if no peripheral unit is identified or if the transcribed voice command cannot be executed.
